# EUROPÄISCHE PATENTSCHRIFT

(11) **EP 1 775 830 B1**
(45) Veröffentlichungstag und Bekanntmachung des Hinweises auf die Patenterteilung: **24.04.2013**
(21) Anmeldenummer: 06019525.2
(22) Anmeldetag: 19.09.2006
(51) Int. Cl.: H02P 6/08, H02P 6/24, H02P 25/02, H02P 29/00

(54) **Verfahren zur Verteilung von Strom auf die Stromrichterventile für einen Synchronstellantrieb in Endlage**
Method for distributig current on converter valves for a synchronous servo drive in final position
Méthode de distribution du courant dans les interrupteurs d'un convertisseur pour un servomoteur synchrone en positon finale

(30) Priorität: 14.10.2005 DE 102005049114
(43) Veröffentlichungstag der Anmeldung: 18.04.2007
(73) Patentinhaber: ZF FRIEDRICHSHAFEN Aktiengesellschaft, 88038 Friedrichshafen (DE)
(72) Erfinder: Schön, Wolfgang, 88085 Langenargen (DE); Ketteler, Karl-Hermann, 88677 Markdorf (DE); Muschel, Allan, 88045 Friedrichshafen (DE); Fuessl, Andreas, 88079 Kressbronn (DE); Kett, Jürgen, 88045 Friedrichshafen (DE)
(74) Vertreter: Zietlow, Karl-Peter

(56) Entgegenhaltungen:
- WO-A-03/032480

## Beschreibung

Die vorliegende Erfindung betrifft ein Verfahren zur Verteilung des Stromes auf die vorhandenen Stromrichterventile im Wechselrichter von Stellenantrieben mit Synchronstellmotoren bei Erreichen der Endlage des Stellantriebs bei gleichzeitiger hoher Moment- oder Kraftbeanspruchung gemäß dem Oberbegriff des Patentanspruchs 1.

Bei Asynchronmaschinen ist zum Erzeugen eines Stillstandsmomentes eine gewisse Statorfrequenz erforderlich. Auf diese Weise werden in diesem Fall automatisch alle Halbleiter der Brückenschaltung gleichmäßig mit Strom beaufschlagt. Bei Synchronmaschinen steht das magnetische Feld im Stillstand jedoch still, so dass sich je nach Läuferlage eine bestimmte feste Stromverteilung auf die Halbleiter einstellt. Dies kann dazu führen, dass ein Phasenmodul dauerhaft mit dem Scheitelwert des Strangstromes für die elektrische Maschine beaufschlagt werden muss. Insbesondere bei verlustarmen elektrischen Maschinen, bei denen eine kleine Stillstandspannung ausreichend ist, um diesen Strom zu treiben, ist der Freilaufpfad dieses Phasenmoduls in nachteiliger Weise stark beansprucht.

Aus der DE 41 00 864 A1 ist ein Verfahren zur Ansteuerung eines elektrischen Synchronmotors bekannt, bei dem durch Anlegen eines Drehspannungssystems an die Wicklungen des Stators des elektrischen Synchronmotors in Abhängigkeit der Rotorlage ein magnetisches Drehfeld aufgebaut wird, wobei die Phase des angelegten Drehspannungssystems in Abhängigkeit der gemessenen Motorbelastung verschoben wird, so dass bei jeder Motorbelastung das dazu erforderliche Drehmoment mit möglicht kleinem Strom aufgebaut werden kann. Durch dieses Verfahren soll der Wirkungsgrad erhöht werden.

Aus der DE 42 04 645 A1 ist eine Strombegrenzungsschaltung für elektronisch gesteuerte Elektromotoren bekannt, bei denen der Statorstrom durch elektronische Leistungsschaltglieder in vorgebbaren Drehwinkelbereichen eingeschaltet wird, bei der eine Zeitgeberschaltung vorgesehen ist, die die Zeitdauer des Statorstromflusses auf einen die vorgegebenen Leistungsgrenzwerte der Leistungsschaltglieder nicht überschreitenden Wert begrenzt.

Des Weiteren ist aus der DE 101 97 212 B4 ein Motorsteuerungssystem für eine Spritzgussmaschine bekannt, mit einer Blockier-Erfassungseinrichtung zum Erfassen eines Blockierzustandes des Motors und zur Erzeugung eines Blockier-Erfassungssignals und mit einem Umrichter zum Erhöhen oder Erniedrigen eines d-Feld-Ankerstroms durch den Motor, während ein q-Momenten-Ankerstrom konstant gehalten wird, so dass ein Absolutwert eines Stroms einer Motorphase mit dem größten Strom, der durch den Motor fließt, basierend auf dem Blockier-Erfassungssignal kleiner wird. Hierbei wird über den Umrichter der d-Feld-Ankerstrom so in den Motor eingeprägt, dass zwei der drei Phasenströme gleich werden und der dritte Phasenstrom vom gleichen Betrag aber komplementären Vorzeichen ist.

Schließlich ist aus der nicht vorveröflentlichten WO 2006/02114 A1 eine Motorsteuerung einer Spritzgussmaschine bekannt, mittels derer ein Elektromotor Pendelbewegungen um seine Soll- oder Mittelposition ausführen kann, wodurch eine einseitige Belastung der einzelner Transistoren der Motorsteuerung entfällt. Diese Pendelbewegung kann durch eine Änderung der elektrischen Phasenlage um 90°, 120°, 180°, 240°, 300° oder 360° bewirkt werden.

Der vorliegenden Erfindung liegt die Aufgabe zugrunde, ein Verfahren zur Verteilung des Stromes auf die vorhandenen Stromrichterventile bzw. Schalter im Wechselrichter von Stellenantrieben mit Synchronstellmotoren bei Erreichen der Endlage des Stellantriebs bei gleichzeitiger hoher Moment- oder Kraftbeanspruchung anzugeben.

Durch das erfindungsgemäße Verfahren soll die gleichmäßige Verteilung des Phasenstroms auf alle Halbleiter der Brücke des Synchronstellmotors gewährleistet werden. Hierbei soll auch gewährleistet werden, dass jedes Halbleiterventil bzw. jeder Schalter im Wechselrichter deutlich unterhalb seinerthermischen Zeitkonstante mit dem maximalen Strom beaufschlagt werden muss.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Verfahren zur Entlastung der Leistungselektronik vor geschlagen, im Rahmen dessen der Stromraumzeiger des Stromes mit ausreichender Frequenz um +/-90° elektrisch um die gewünschte Endlage bewegt wird.

Die elektrische Winkeldrehung des Stromraumzeigers um 180° (d.h. um +/-90° um die gewünschte Endlage) wird hierbei durch die Änderung der Schaltposition der Leistungshalbleiter erzielt.

Weiterhin sind auch Winkeldrehungen um 60° (+/-30°) oder 120° (+/-60°) möglich. Für eine Winkeldrehung um 120° müssten beispielsweise die Schalter 1, 2 und 5, 6 sequentiell ein- bzw. ausgeschaltet werden, für die Winkeldrehung um 60° bespielsweise die Schalter 1,2 oder 5, 6 ein- bzw. ausgeschaltet werden. Bei Winkeldrehungen um 60° bzw. 120° ist die Entlastungswirkung im Vergleich zu einer Winkeldrehung von 180° natürlich geringer.

Die Erfindung wird im Folgenden anhand der beigefügten Figuren beispielhaft näher erläutert.
Es zeigen:
- Figur 1: eine schematische Darstellung des Synchronmotors und einer Schaltposition des Wechselrichters und
- Figur 2: eine schematische Darstellung des Synchronmotors und einer weiteren Schaltposition des Wechselrichters aus Figur 1 nach erfolgter Winkeldrehung des Stromraumzeigers um 180° gemäß der Erfindung.

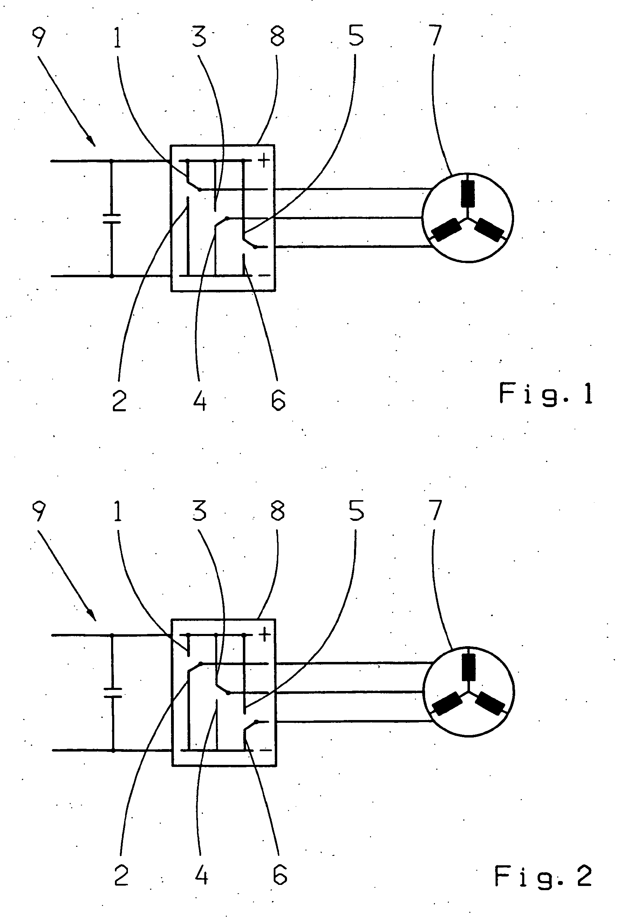

In Figur 1 ist beispielhaft eine feste unbewegte Stellung des Elektromotors 7 gezeigt, bei der sich eine feste Schaltposition des Wechselrichters der Leistungselektronik 8 einstellt, wobei ein Zwischenkreis mit 9 bezeichnet ist; der Strom fließt über die Schalter 1 und 5 in den Motor 7 hinein und über den Schalter 4 wieder hinaus. In diesem Fall ist insbesondere der Schalter 4 hoch beansprucht.

Eine elektrische Winkeldrehung des Stromraumzeigers um 180° (d.h. um +/-90° um die gewünschte Endlage) gemäß dem erfindungsgemäßen Verfahren wird durch die beispielhafte Änderung der Schaltposition der Leistungshalbleiter erzielt, wie in Figur 2 dargestellt.

In diesem Fall sind die Schalter 1, 4 und 5 der Leistungselektronik ausgeschaltet und die Schalter 2, 3 und 6 sind beansprucht, da der Strom über den Schalter 3 in den Motor hineinfließt und über die Schalter 6 und 2 hinausfließt. Bei der auszuführenden erfindungsgemäßen Lösung muss der Stromraumzeiger kontinuierlich mit allen erforderlichen Zwischenpositionen der Halbleiterschalter 1, 2, 3, 4, 5, 6 um 180° gedreht werden. Mit diesem Schwenk des Stromraumzeigers ist auch eine kontinuierliche Läuferbewegung verbunden. Da insbesondere Synchronmotoren mit Permanentmagneten häufig hochpolig ausgeführt werden, ist die mechanische Bewegung kleiner. Bei einer Maschinenpolzahl von 2p ergibt sich ein mechanischer Drehwinkel von ϕₘ = +/-90°/p.

Bei einer 2p = 24-poligen elektrischen Synchronmaschine stellt sich beispielsweise ein Schwenkwinkel von +/-7,5° ein. Wenn diese Synchronmaschine auf einer Spindel von z. B. 10 mm Steigung arbeitet, ergibt sich daraus ein wechselnder Hub von +/-0,21 mm. Diese Pulsation ist in vielen Fällen zulässig, insbesondere deshalb, weil sie nur in einer Endlage bei hoher Strom- und Momentenbeanspruchung eines dynamischen Stellglieds auftritt.

Durch die erfindungsgemäße Konzeption wird auf einfache Weise die Leistungselektronik in der Endlage von Stellern mit Synchronstellmotoren entlastet, ohne die Notwendigkeit, weitere Bauteile in ein bestehendes System zu integrieren.

### Bezugszeichen

- 1: Schalter
- 2: Schalter
- 3: Schalter
- 4: Schalter
- 5: Schalter
- 6: Schalter
- 7: Synchronmaschine
- 8: Leistungselektronik
- 9: Zwischenkreis

## Patentansprüche

1. Verfahren zur Verteilung des Stromes auf die vorhandenen Stromrichterventile bzw. Schalter im Wechselrichter von Stellenantrieben mit Synchronstellmotoren bei Erreichen der Endlage des Stellantriebs bei gleichzeitiger hoher Moment- oder Kraftbeanspruchung, **dadurch gekennzeichnet, dass** der Stromraumzeiger des Stromes mit ausreichender Frequenz um +/-30° elektrisch um die gewünschte Endlage bewegt wird, wobei eine kontinuierliche Läuferbewegung erfolgt.

2. Verfahren zur Verteilung des Stromes auf die vorhandenen Stromrichterventile bzw. Schalter im Wechselrichter von Stellenantrieben mit Synchronstellmotoren nach Anspruch 1, **dadurch gekennzeichnet, dass** die elektrische Winkeldrehung des Stromraumzeigers um 60° (d. h. um +/-30° um die gewünschte Endlage) durch die Änderung der Schaltposition der Leistungshalbleiter erzielt wird.

3. Verfahren zur Verteilung des Stromes auf die vorhandenen Stromrichterventile bzw. Schalter im Wechselrichter von Stellenantrieben mit Synchronstellmotoren nach Anspruch 1, **dadurch gekennzeichnet, dass** der Stromraumzeiger kontinuierlich mit allen erforderlichen Zwischenpositionen der Halbleiterschalter gedreht wird.

## Claims

1. Method for distributing the current between the converter valves or switches provided in the inverter of servo drives with synchronous servo motors on reaching the end position of the servo drive with simultaneous high torque or force loading, **characterized in that** the current phasor of the current with sufficient frequency is moved through +/-30° electrical around the desired end position, wherein continuous rotor movement takes place.

2. Method for distributing the current between the converter valves or switches provided in the inverter of servo drives with synchronous servo motors according to Claim 1, **characterized in that** the electrical angular rotation of the current phasor through 60° (i.e. through +/-30° around the desired end position) is achieved by the change in switching position of the power semiconductors.

3. Method for distributing the current between the converter valves or switches provided in the inverter of servo drives with synchronous servo motors according to Claim 1, **characterized in that** the current phasor is rotated continuously with all required intermediate positions of the semiconductor switches.

## Revendications

1. Procédé pour distribuer du courant aux soupapes de convertisseur ou aux interrupteurs existants dans l'onduleur de commandes de réglage avec des moteurs synchrones lors de l'arrivée en position de fin de course de la commande de réglage dans le cas d'une sollicitation simultanément élevée par un couple ou une force, **caractérisé en ce que** l'indicateur spatial d'intensité du courant est déplacé avec une fréquence suffisante de ± 30° électriquement autour de la position de fin de course souhaitée, ce qui produit un mouvement continu du rotor.

2. Procédé pour distribuer du courant aux soupapes de convertisseur ou aux interrupteurs existants dans l'onduleur de commandes de réglage avec des moteurs synchrones selon la revendication 1, **caractérisé en ce que** la rotation angulaire électrique de l'indicateur spatial d'intensité de 60° (c'est-à-dire de ± 30° autour de la position de fin de course souhaitée) est produite par variation de la position de commutation des semi-conducteurs de puissance.

3. Procédé pour distribuer du courant aux soupapes de convertisseur ou aux interrupteurs existants dans l'onduleur de commandes de réglage avec des moteurs synchrones selon la revendication 1, **caractérisé en ce que** l'indicateur spatial d'intensité est tourné en continu avec toutes les positions intermédiaires requises des interrupteurs à semi-conducteurs.
